# EUROPEAN PATENT APPLICATION

(11) **EP 4 711 904 A1**
(43) Date of publication of application: **18.03.2026**
(21) Application number: 24200490.1
(22) Date of filing: 16.09.2024
(51) Int. Cl.: G06F 3/04815, G06F 3/01, G06T 19/20

(54) **VISUALIZING OCCLUDED DATA STRUCTURES**

(71) Applicant: Hexagon Innovation Hub GmbH, 9435 Heerbrugg (CH)
(72) Inventor: FJELLVANG, Rune, 0196 Oslo (NO); SUMBERA, Stanislav, 767 01 Kromeriz (CZ); AGNIHOTRI, Sahil, Oslo (NO)
(74) Representative: Kaminski Harmann

(57) **Abstract**

The invention pertains to a computer-implemented method (100) for visualizing, in an extended reality (XR), occluded data, the XR visualizing front data, behind which the occluded data is hidden, the method comprising: displaying (110) a view on the XR to a user on an XR device, the view comprising 3D representations of the visualized front data; receiving (120) commands from the user regarding a change of the view on the XR; and changing (130) the view on the extended reality based on the commands, wherein receiving (120) the commands comprises performing a gesture recognition procedure (122) to detect (124) execution of pre-defined gestures by the user, wherein each of the pre-defined gestures is interpreted (126) as a corresponding command for the XR device. The predefined gestures comprise at least one removal gesture that corresponds to a removal command of the XR device, wherein, upon receiving the removal command, the view on the XR is changed by removing (132) the representations of the front data and visualizing (134) 3D representations of the occluded data to the user, wherein the removal gesture specifies a direction, a depth, and at least one of a width and an angle; and the representation of the front data is removed around a removal position defined by the specified direction, with the specified depth and with the specified width or the specified angle, respectively.

## Description

The present invention pertains to a computer-implemented method for visualizing occluded data structures in an extended reality (XR), such as augmented reality (AR), virtual reality (VR) or mixed reality (MR). In particular, the data can be three-dimensional (3D) (or other multi-dimensional) volumetric data, for instance, voxels or point clouds. The method allows a user of an XR system, by performing an intuitive hand gesture, to temporarily remove visualized 3D data structures in the XR to expose the previously occluded 3D data behind the removed 3D data. Removal of data does not necessarily mean that the removed data is not visualized at all. Instead, the data structures may be moved or rotated out of the way, thus allowing viewing the removed and exposed data at the same time.

When working with massive amounts of multi-dimensional volumetric data in an XR context, it can be very difficult for a human user to understand specific elements or sections of the data and to interact with them. One example is how to understand and interact with radio-network frequency (RF) data from both simulations and actual measured data from a distance. Continuous data structures impose challenges in terms of effectively visualizing structures of interest due to the overwhelming amount of data. In XR the user can observe data structures in the immediate proximity. However, the user cannot see what lies behind the data unless he changes his point of view- e.g., virtually in VR or physically in AR.

It would be desirable to improve, in 3D XR environments, a user's observing and understanding of hidden data structures, or data phenomena in dense data representations (voxels, point clouds, volumetric data).

It is therefore an object of the present invention to provide an improved method of visualizing data to a user in an XR, the method allowing the user to watch data that is currently occluded by other data.

It is a particular object to provide such a method, wherein the user may control the visualization of the currently occluded data in an easy and intuitive manner.

At least one of these objects is achieved by the appended claims.

A first aspect of the invention pertains to a computer-implemented method for visualizing, in an extended reality (XR), occluded data, the XR comprising front data, behind which the occluded data is hidden. Hidden does not necessarily mean that the occluded data cannot be seen, it may also mean that a user may have problems to understand the occluded data due to the data positioned in front thereof. The method comprises:
- displaying, on an XR device, a view on the XR to a user of the XR device, the view comprising 3D representations of the front data;
- receiving commands from the user regarding a change of the view on the XR; and
- changing the view on the XR based on the commands.

Receiving the commands comprises performing a gesture recognition procedure to detect execution of pre-defined gestures by the user, wherein each of the pre-defined gestures is interpreted as a corresponding command for the XR device. The predefined gestures comprise at least one removal gesture that corresponds to a removal command of the XR device, wherein, upon receiving the removal command, the view on the XR is changed by at least partially removing the representations of the front data and visualizing the 3D representations of the occluded data to the user. The removal gesture specifies a direction, a depth, and at least one of a width and an angle, and the representation of the front data is removed around a removal position defined by the specified direction, with the specified depth, and with the specified width or the specified angle, respectively.

According to some embodiments of the method, the occluded data and the front data comprise multi-dimensional data structures.

Accordingto some embodiments of the method, the XR is an augmented reality (AR), wherein the view on the extended reality comprises a view on a real environment around the user.

According to some embodiments of the method, the removal gesture comprises a movement of two hands of the user.

Accordingto some embodiments of the method, the direction is defined by fingertips of both hands, particularly by a position of the fingertips relative to the user's body.

According to some embodiments of the method, removing the representation of the front data comprises splitting the representation of the front data at the removal position. In some embodiments, splitting the front data comprises moving the representation of front data right from the removal position to the right and moving the representation of front data left from the removal position to the left. In some embodiments, splitting the front data comprises compressing the representation of front data. In some embodiments, splitting the front data comprises generating a gap in the representation of the front data.

According to some embodiments of the method, removing the representation of the front data comprises rendering the representation of the front data around the removal position partially transparent. In some embodiments, a degree of transparency is user-selectable with the removal gesture.

According to some embodiments, the removal gesture comprises an initial position of the two hands and a divide position of the two hands, for instance wherein the initial position specifies the direction, and/or the divide position specifies at least the width and the depth. In some embodiments, the initial position comprises the two hands, particularly their palms, touching, and the direction is defined by fingertips of both hands during the initial position. In some embodiments, the divide position comprises an extending of the hands towards the front data, and the depth is defined by an extent of the extending of the hands. In some embodiments, the divide position comprises the two hands being separate, wherein the width is defined by a distance between the hands during the divide position.

According to some embodiments of the method, removing the representation of the front data comprises rotating the representation of front data about a rotating point, wherein
- the rotating point is defined by the removal position and the depth;
- the representation of front data right from the removal position is rotated to the right and the representation of front data left from the removal position is rotated to the left; and
- the representation of the front data is rotated so that the specified angle of rotation results.

According to some embodiments, the removal gesture comprises an initial position of the two hands, and a rotate position of the two hands, for instance wherein the initial position specifies the direction, and/or the rotate position specifies at least the depth and the angle of rotation. In some embodiments, the initial position comprises the two hands, particularly their palms, touching, and the direction is defined by fingertips of both hands during the initial position. In some embodiments, the rotate position comprises an extending of the hands towards the front data, and the depth is defined by an extent of the extending of the hands.

According to some embodiments, the rotate position comprises the fingertips of both hands touching, the palms forming an indication angle, and the angle of rotation is defined by the indication angle, e.g. corresponds to the indication angle.

According to some embodiments, removing the representation of the front data comprises separating the rotated representation of front data, the removal gesture comprising a reveal position of the two hands, wherein the reveal position specifies at least the width of the separation. In some embodiments, the reveal position comprises the two hands being separate, and the width is defined by a distance between the hands during the reveal position. In some embodiments, the reveal position comprises the palms forming the indication angle.

A second aspect of the invention pertains to an XR system that is configured to execute the method according to the first aspect, the system comprising:
- an XR device comprising display means configured to display the XR to a user; and
- a gesture recognition module configured to detect execution of pre-defined gestures by the user wherein each of the pre-defined gestures is interpreted as a corresponding command for the XR device.

According to some embodiments of the XR system, the XR device is a wearable, particularly an XR goggle, and/or comprises controllers for manipulating the XR.

According to some embodiments, the XR device comprises the gesture recognition module, particularly wherein the gesture recognition module comprises at least one camera that is configured, positioned and aligned to capture images of the hands of the user.

A third aspect of the invention pertains to a computer program product comprising program code having computer-executable instructions for performing the method according to the first aspect of the invention, particularly when executed on a computing unit of the XR system according to the second aspect.

The invention in the following will be described in detail by referring to exemplary embodiments that are accompanied by figures, in which:
- Fig. 1: shows an exemplary XR being visualized by an XR device to a user of the device, wherein visualized volumetric data in the front blocks the view on other volumetric data;
- Fig. 2: shows the XR of Fig. 1, wherein some of the volumetric data in the front has been removed to allow the user viewing the previously occluded data;
- Fig. 3: shows an initial position of an exemplary gesture that allows the user to select data to be removed;
- Fig. 4: illustrates the initial position of Fig. 3 being used in the context of an XR;
- Fig. 5: shows a second position of a first exemplary gesture;
- Fig. 6: illustrates the second position of Fig. 5 being used in the context of an XR;
- Fig. 7: shows a second position of a second exemplary gesture;
- Fig. 8: illustrates the second position of Fig. 7 being used in the context of an XR;
- Fig. 9: illustrates a third position of the second exemplary gesture being used in the context of an XR;
- Fig. 10: shows a flow chart illustrating a first exemplary embodiment of a method according to the invention; and
- Fig. 11: shows a flow chart illustrating a second exemplary embodiment of a method according to the invention.

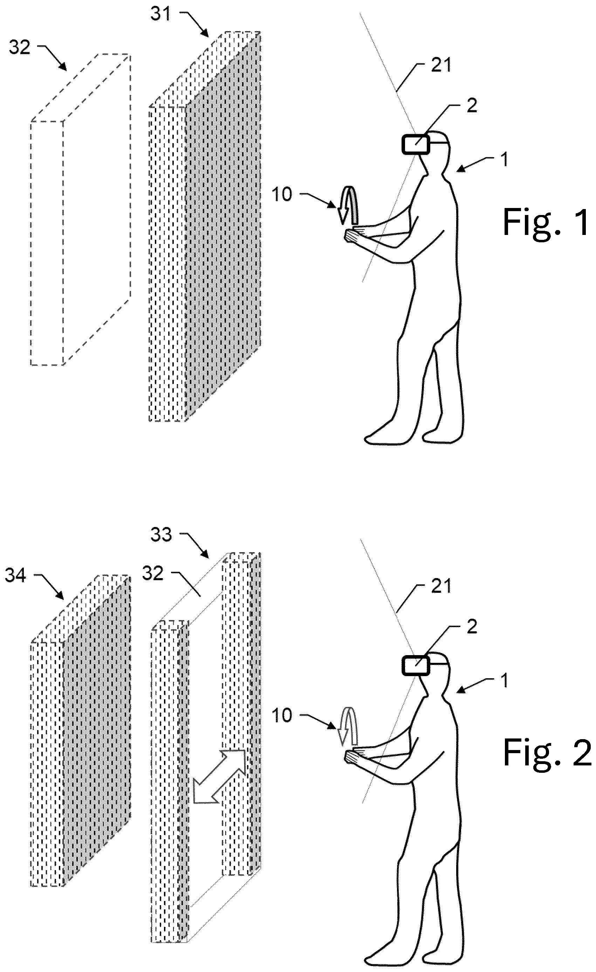

Figure 1 shows a person ("user") 1 wearing a wearable extended-reality device (XR device) 2. The XR device 2 is configured to display a view on an extended reality (XR) to the user 1. Optionally, the XR device 2 may be part of a larger XR system and connected to an external computing unit - by means of a cable or wireless. For instance, the XR may be an augmented reality (AR), wherein a real scene is overlaid with multi-dimensional volumetric data. In AR mode, the visualized data are aligned with reality based on various known techniques like VPS, GNSS etc. The user can then explore data overlayed over the reality. Alternatively, the XR can be a virtual reality (VR) not comprising a real scene, or a mixed reality (MR). The multi-dimensional volumetric data comprises visual data structures such as point clouds, voxels, meshes or volumes.

The XR device 2 (or an XR system) comprises gesture recognition capabilities. In particular, the device or system may comprise a camera. For instance, the camera may be configured to capture images of a real scene to include the real scene in an AR in real time. The camera's field of view 21 preferably may be oriented to allow the camera to capture images of the user's hands when these perform a gesture 10. Other cameras or sensors may be provided that capture gestures that are out of the camera's field of view 21. The captured gesture may be identified as a certain command for the XR device (or system), such as a command to change a view on the XR. Alternatively or additionally, the user 1 may wear gloves with sensors that are configured to detect the gesture.

Optionally, the XR device may be configured to allow the user 1 to issue commands also using other means than only gestures. In particular, user-selectable icons may be visualized in the provided XR, or handheld controllers may be provided to the user. For instance, these other means may comprise standard controls on the screen such as virtual hands, virtual joysticks, icons, sliders, buttons, or manipulators in 3D space ("gizmos"). Alternatively or additionally, the user may be enabled to manipulate the XR, the data and/or the view using a neural link.

The displayed XR comprises volumetric data structures, such as, e.g., radio network frequency (RF) data. The volumetric data structures of the XR are visualized in a plurality of layers, so that layers that are visualized in the front obstruct the user's view on layers behind them. Since the occluded layers are not visible, the XR device 2 need not visualizing or even calculate them.

In the shown example, the volumetric data structures of the XR comprise first data (front data) 31 that is visualized to the user 1 by the XR device 2, and second data (occluded data) 32 that is positioned behind the front data 31 and thus not visible to the user 1. The user may issue a command to the XR device 2 to make this occluded data 32 visible-for instance by performing a corresponding gesture 10. For instance, if the front data 31 and the occluded data 32 belong to different data types, the user may deselect visualization of the data type of the front data 31. However, this does not work if both belong to the same data type, e.g. RF data.

Figure 2 shows the user 1 with the XR device 2 of Figure 1 having performed a pre-defined gesture 10 to partially remove the front data 32 so that the previously occluded data 34 becomes visible. This gesture allows the user 1 to select a direction at which the front data 32 should be split to create a gap, making the data behind the gap visible. The gesture also allows the user 1 to select as a width and depth of the gap. In the shown example, according to the user's gesture, the front data 32 has been split (and, thus, removed) in the middle and moved to the left and to the right, so that two columns of condensed data 33 remain. Instead of being condensed, other forms of reducing the size of the data can be applied, e.g., compressing, shrinking or packing. Instead of splitting the data, it may be manipulated in other ways, e.g., it may be made transparent or rotated.

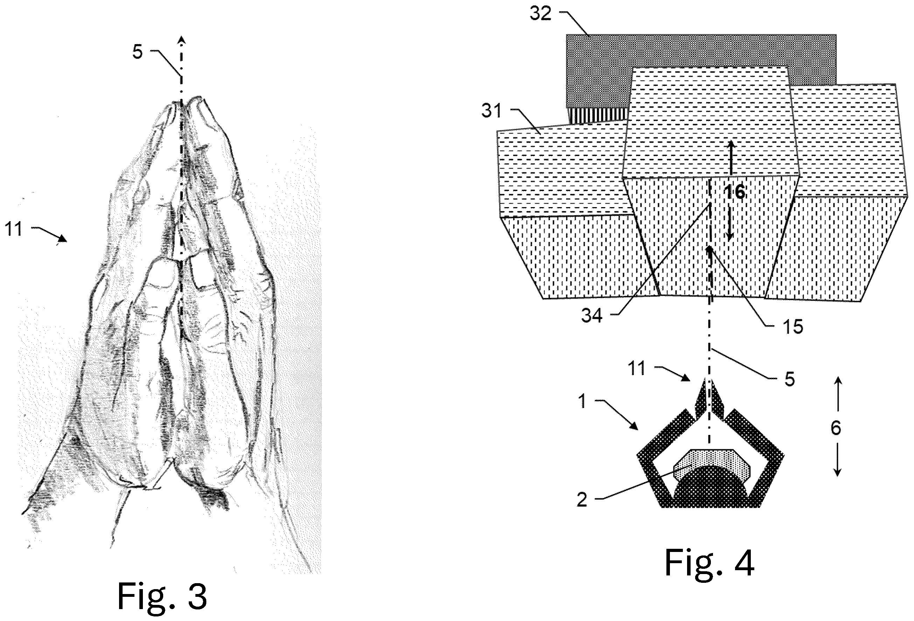

Figure 3 illustrates a first position ("initial position") 11 of a first example of such a gesture ("removal gesture") in detail. The palms of both hands touch, the fingertips pointing away from the user's body and towards the occluded data to be visualised (and, thus, to the data to be removed in front of the occluded data), thereby specifying the direction ("split direction") 5. This gesture position may be recognized by the gesture recognition capabilities of the XR device, for instance using a camera or gloves. Optionally, for instance if fine gesture recognizing is not available or not sufficient, the user may initiate in a menu that the XR device awaits performing of this particular gesture.

Figure 4 illustrates this initial position 11 in the context of a visualized XR. The user 1 performing the gesture wears an XR device 2 that is configured to detect the gesture. In the initial position 11 of the gesture, the user's hands are pointed towards visualized data ("front data") 31 in front of occluded data 32. Both, the front data 31 and the occluded data 32 comprise visual data structures such as point clouds, voxels, meshes or volumes. To the user 1, these may appear as a continuous mass of data. The XR device 2 has means for detecting a gesture performed by the user. For instance, these means comprise a camera that has a field of view wide enough to capture images of the user's hands while performing the gesture. Optionally, various sensors and computing means may be involved, such as gloves, other sensors, and/or image recognition using artificial intelligence.

The XR device is configured to detect the gesture and to interpret the gesture as a specific command to change the view on the data. The user 1 wishes to view the occluded data 31 instead of the presently visualized data 32 in front thereof. Therefore, the user 1 aims the fingertips towards a point 15 at the front data 32, where the front data should be removed to reveal the occluded data 31 behind. By moving the hands towards or away from the body of the user, i.e. by specifying a distance 6 of the hands from the user's body, a depth 16 of the removed front data 32 may be selected.

The user 1 thus defines an initial line of division at point 15 by closing the hands together with straight fingers. When this initial position 11 of the gesture is detected, this initiates the split effect. Division of data will start at the closest object to the user along the line (direction) 5 defined by the fingertips, i.e. at point 15. Initial depth 16 of the division can be adjusted by moving the closed hands forward or backwards, e.g., using elbow movements.

The point 15 or a resulting line of division 34 may be displayed to the user 1 by the XR device 2. The fingers point to the line of division 34 in perspective view. For instance, moving the hands up moves the point 15 further away towards the horizon. The line 34 can be moved freely in any direction by moving the fingertips, e.g., by using wrist rotation in the desired direction. In the shown example, the division line 34 is vertical. However, optionally, the orientation of the division line 34 may be selectable by the user 1 using the initial position 11 of the gesture. For instance, the division line may always have the same orientation as the palms, so that tilting the hands clockwise or counter-clockwise will tilt the division line 34 in the same manner. Tilting the hands can lead to a directly corresponding reaction by the division line 34 - e.g., tilting the hands by 45° leads to a tilt of the division line 34 by 45° in the same direction. Alternatively, tilting the hands can be used to a start a rotation of the division line 34 in the selected direction - e.g., tilting the hands clockwise leads to clockwise rotation of the division line 34 until the hands are brought into a vertical orientation again.

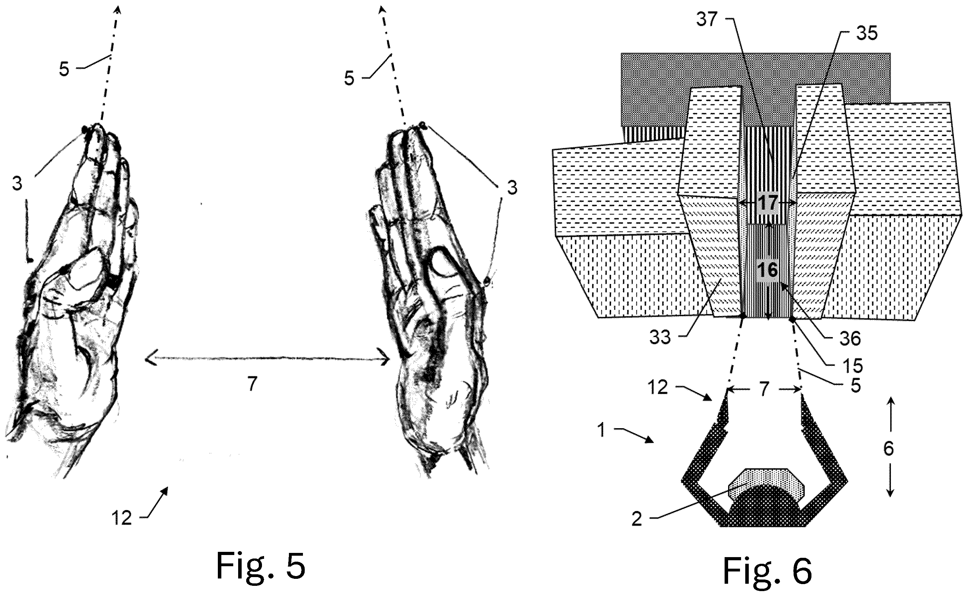

Figure 5 illustrates a second position ("divide position") 12 of the first exemplary removal gesture in detail. Starting from the initial position, the user moves the hands away from another so that a distance 7 between the two hands result. The fingertips of each hand still point towards the front data to be removed along, each hand defining a direction 5.

Optionally, touch points 3 may be defined on the opposite sides of the hands in the perspective of the viewed data by the user, the touch points allowing the user to easily select further away objects or closer ones. As further away objects are smaller, effect of the gesture will be bigger and coarser than for closer one (and, thus, larger) objects. For instance, as shown here, the touch points 3 can be connected to fingernails and knuckles of both hands. They may be used for setting up the depth of the division on the infinitive line of division. For instance, this can also be used for visualization of data below the ground. To do so, the user points the gesture downwards. To define the depth below ground, in conjunction with the depth indication 6, a touch point, e.g. connected to the fingernails, sets the exact depth of division.

Figure 6 illustrates this divide position 12 in the context of the XR of Figure 4. The user 1 separates the hands, choosing a certain distance 7 between the hands to indicate the desired extent 17 of the division: the larger the distance 7 between the hands, the wider the resulting 'corridor' 36. The front data is moved to the sides showing the data of interest 37, i.e. the previously occluded content, behind it. The moved front data 33 may be squeezed, compressed or otherwise deformed in the process. When the front data are moved to the side, their profile 35 towards the data of interest 37 is revealed. The depth 16 of the divide can be adjusted in real time by moving both hands forward or backwards (i.e., adjusting the hands' distance 6 to the user's body). For instance, the position of the fingertips indicates the depth 16. The depth may be visually indicated by highlighted touch points on the moved front data 33.

The dimensions 16, 17 of the corridor 36 may be controlled in real-time by specific movements 6, 7 and can be dynamically moved in any direction across the user's field of view. The free view-through caused by this effect enables to the user to clearly observe otherwise hidden data 37 with the context of side profile of the moved data 33 from the user's point of view. The user 1 may freeze the split, for instance by a "thumbs up" gesture of both hands. Optionally, if touch points are activated (see Figure 5), then both sides of the moved data 33 or of the profile 35 may stick with the user's hands, i.e. follow the hands' movements.

A distance scale or other visual aids may be displayed to allow the user 1 to better understand the distances in the perspective view, e.g., the depth 16 and width 17 of the corridor 36, e.g., from the point of the split 15 or from the user 1. For instance, a bottom or top plane of the corridor 36 created by the gesture may comprise such a distance scale.

As shown here, splitting the front data may lead to condensed data 33: the visual data structures (e.g., point clouds, voxels, meshes, volumes etc. are spread-out to the sides. This enables to see-through opaque data by squeezing it (them) to the sides, see their profile and thereby uncovers data behind. Sides of the divided data shows its forward data fluctuation profile caused by cut-off at the line of division. An advantage of this approach is that no data is actually removed. Instead, it is stretched, condensed and/or moved around, and thus still visible in its dense form. Alternatively, splitting the front data may include removing parts of the front data, as if the user would "dig" through the front data to see what lies behind. An advantage of this approach is that the visualized data is in its original state. Optionally, this removing of the data may lead to a view box (or cone) inside the continuous data structures. Bottom or top area that is left by removing the data might be used for displaying a distance scale.

In another alternative, splitting the front data may comprise making some of the front data partially transparent, e.g. semi-transparent. This effect may also be applied to a ground of the XR to see underground data, e.g. data related to subsurface utilities. Such a subsurface utility visualization is disclosed in detail in EP 3 748 583 A1. The user may then select the dimensions (depth 16, width 17) of the semi-transparent part of the front data in the same way as the dimensions of the gap 36 in Figure 6. This allows viewing the data in front at its original position and still view the data in the back.

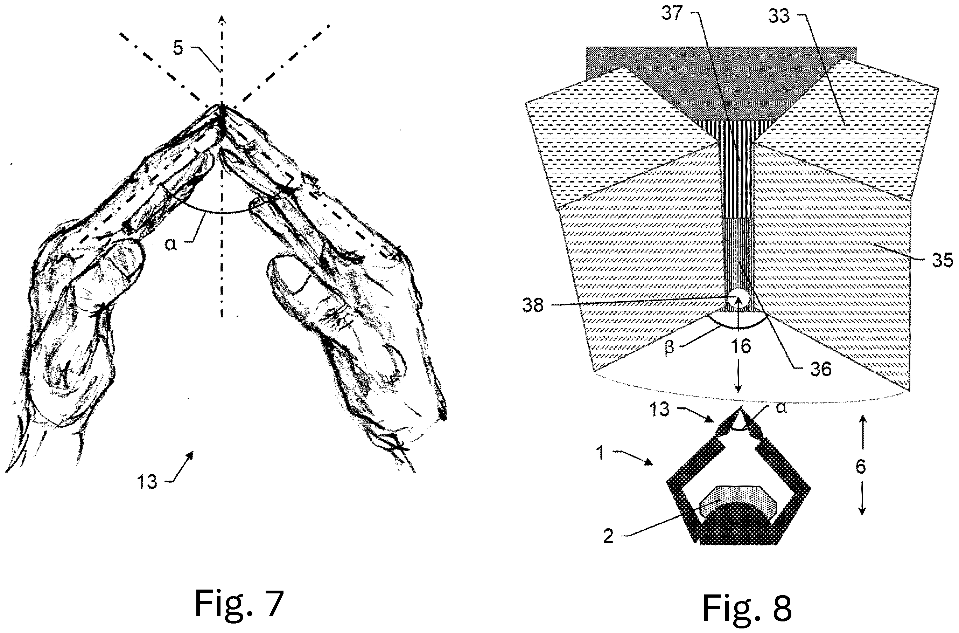

A second embodiment of a removal gesture is illustrated in the following Figures 7 to 9. An initial position of the removal gesture may be the same position as that for the first embodiment, i.e., the initial position shown in Figure 3.

Figure 7 illustrates an example of a second position ("rotation opposition") 13 of a second exemplary gesture in detail. Starting from the initial position of Figure 3, the user moves the palms of the hands away from another, while the fingertips stay together so that an angle α between the palms is formed. In this triangle-like position, the hands together define the direction 5 towards the front data to be removed.

Figure 8 illustrates this rotation position 13 in the context of the XR of Figure 4. Using the triangle-like shape of the hands, the user 1 may open the front data in the same triangular shape, thereby emphasizing sides 35 of the front data 33 while still allowing the user to view through to the further away data 37 by the gap 36 at the more distant end of the split. This is caused by a rotation about a point of rotation 38 placed behind the actual split line. While the revealed back data 37 are still more occluded by the rotated front data 33 and only a small section of the back data is revealed, the user 1 can better observe data fluctuations between the front data and the back data without changing his point of view. Optionally, if touch points are activated (see Figure 6), then both sides of the profile 35 may stick with the user hands, i.e. follow the hands' movements.

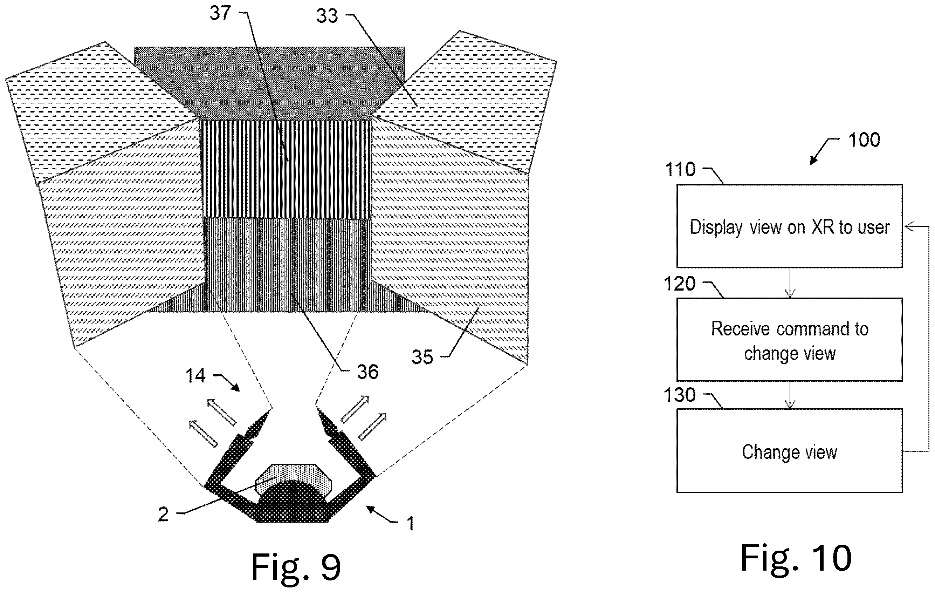

Figure 9 illustrates an optional third position ("reveal position") 14 of the second embodiment of the removal gesture in the context of the XR of Figure 4. The user 1 can increase the size of the gap 36 in order to increase the amount of revealed back data 37 by moving the two blocks of rotated front data 33 away from another. The rotated front data 33 follow the movement of both hands and forearms of the user 1 as indicated by the arrows. For instance, this may be achieved using touch points (see Figure 5).

Figure 10 shows a flow chart illustrating an exemplary embodiment of a method 100 according to the invention. The method starts with displaying 110 a view on an XR (e.g., an AR or VR) to a user of an XR device (e.g., AR goggles). The device receives 120 a command to change the displayed view-e.g. by registering a turning of the head or a gesture. The device then changes 130 the view in accordance with the received command, and the changed view is displayed to the user. Changing the view may include changing the data visualization or the view on the data.

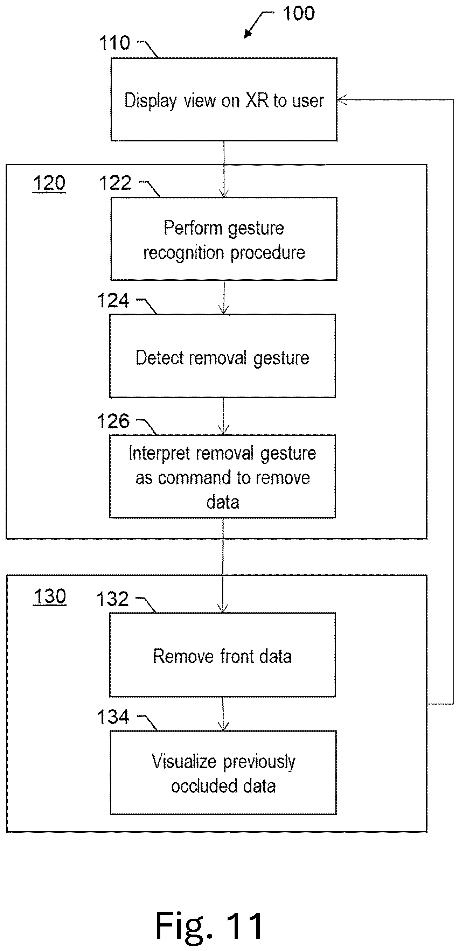

Figure 11 shows a flow chart illustrating another exemplary embodiment of a method 100 according to the invention. Again, the method starts with displaying 110 a view on an XR (e.g., an AR or VR) to a user of an XR device (e.g., AR goggles). Multi-dimensional data structures are visualized in the XR. In case of AR, these data structures are aligned with reality. Multi-dimensional data structures that are visualized in the front of the view block the view on other multi-dimensional data structures further in the back. Again, the device receives 120 a command to change the displayed view on the data. In this case, the user wants to change the view to make the occluded data structures visible by partly removing the data structures in the front. Receiving 120 the command comprises continuously performing a gesture recognition procedure 122 to detect gestures performed by the user. For instance, the gesture recognition procedure 122 may utilize one or more cameras that continuously capture images of the user's hands. A removal gesture performed by the user is detected 124. In particular, this can be one of the removal gestures described above with respect to Figures 3 to 9. The removal gesture specifies details regarding the removal, in particular where and how much of the front data should be removed. For instance, the gesture may specify a direction, a depth, a width and/or an angle. The detected removal gesture is then interpreted 126 as a corresponding command to remove the front data as specified.

The view on the XR (and the data visualized therein) is then changed 130 accordingly by removing 132 the representations of the front data as specified and by visualizing 134 the previously occluded data structures.

Although the invention is illustrated above, partly with reference to some preferred embodiments, it must be understood that numerous modifications and combinations of different features of the embodiments can be made. All of these modifications lie within the scope of the appended claims.

## Claims

1. Computer-implemented method (100) for visualizing, in an extended reality, occluded data (32), the extended reality comprising front data (31), behind which the occluded data is hidden, the method comprising
- displaying (110), on an XR device (2), a view on the extended reality to a user (1) of the XR device (2), the view comprising three-dimensional representations of the front data (31);
- receiving (120) commands from the user (1) regarding a change of the view on the extended reality; and
- changing (130) the view on the extended reality based on the commands, wherein receiving (120) the commands comprises performing a gesture recognition procedure (122) to detect (124) execution of pre-defined gestures by the user (1), wherein each of the pre-defined gestures is interpreted (126) as a corresponding command for the XR device (2),
**characterized in that**
the predefined gestures comprise at least one removal gesture that corresponds to a removal command of the XR device (2), wherein, upon receiving the removal command, the view on the extended reality is changed (130) by at least partially removing (132) the representations of the front data (31) and visualizing (134) the three-dimensional representations of the occluded data (32) to the user (1), wherein
- the removal gesture specifies a direction (5), a depth (16), and at least one of a width (17) and an angle (β); and
- the representation of the front data (31) is removed around a removal position (15) defined by the specified direction (5), with the specified depth (16), and with the specified width (17) or the specified angle (β), respectively.

2. Method (100) according to claim 1, wherein
- the occluded data (32) and the front data (31) comprise multi-dimensional data structures; and/or
- the extended reality is an augmented reality, wherein the view on the extended reality comprises a view on a real environment around the user (1).

3. Method (100) according to claim 1 or claim 2, wherein the removal gesture comprises a movement of two hands of the user (1).

4. Method (100) according to any one of the preceding claims, wherein the direction (5) is defined by fingertips of both hands, particularly by a position of the fingertips relative to the user's body.

5. Method (100) according to any one of the preceding claims, wherein removing (132) the representation of the front data (31) comprises splitting the representation of the front data (31) at the removal position (15), particularly wherein splitting the front data comprises at least one of:
- moving the representation of front data right from the removal position (15) to the right and moving the representation of front data left from the removal position (15) to the left;
- compressing the representation of front data; and
- generating a gap (36) in the representation of the front data (31).

6. Method (100) according to any one of claims 1 to 4, wherein removing (132) the representation of the front data (31) comprises rendering the representation of the front data (31) around the removal position (15) partially transparent, particularly wherein a degree of transparency is user-selectable with the removal gesture.

7. Method (100) according to claim 5 or claim 6, wherein the removal gesture comprises
- an initial position (11) of the two hands, particularly wherein the initial position specifies the direction (5); and
- a divide position (12) of the two hands, wherein the divide position specifies at least the width (16) and the depth (17),
particularly wherein
- the initial position (11) comprises the two hands, particularly their palms, touching, and the direction (5) is defined by fingertips of both hands during the initial position (11); and/or
- the divide position (12) comprises an extending of the hands towards the front data (31), and the depth (16) is defined by an extent (6) of the extending of the hands; and/or
- the divide position (12) comprises the two hands being separate, wherein the width (17) is defined by a distance (7) between the hands during the divide position (12).

8. Method (100) according to any one of claims 1 to 4, wherein removing (132) the representation of the front data (31) comprises rotating the representation of front data about a rotating point (38), wherein
- the rotating point (38) is defined by the removal position (15) and the depth (16);
- the representation of front data right from the removal position (15) is rotated to the right and the representation of front data left from the removal position (15) is rotated to the left; and
- the representation of the front data (31) is rotated so that the specified angle of rotation (β) results.

9. Method (100) according to claim 8, wherein the removal gesture comprises
- an initial position (11) of the two hands, particularly wherein the initial position specifies the direction (5); and
- a rotate position (13) of the two hands, wherein the rotate position specifies at least the depth (16) and the angle of rotation (β), particularly wherein
- the initial position (11) comprises the two hands, particularly their palms, touching, and the direction (5) is defined by fingertips of both hands during the initial position (11); and/or
- the rotate position (13) comprises an extending of the hands towards the front data (31), and the depth (16) is defined by an extent (6) of the extending of the hands.

10. Method (100) according to claim 9, wherein
- the rotate position (13) comprises the fingertips of both hands touching, the palms forming an indication angle (α); and
- the angle of rotation (β) is defined by the indication angle (α), in particular wherein the angle of rotation (β) corresponds to the indication angle (α).

11. Method (100) according to claim 9 or claim 10, wherein removing (132) the representation of the front data (31) comprises separating the rotated representation of front data, the removal gesture comprising a reveal position (14) of the two hands, wherein the reveal position specifies at least the width (17) of the separation, particularly wherein
- the reveal position (14) comprises the two hands being separate, and the width (17) is defined by a distance (7) between the hands during the reveal position (14); and/or
- the reveal position (14) comprises the palms forming the indication angle (α).

12. XR system comprising
- an XR device (2) comprising display means configured to display an extended reality to a user (1); and
- a gesture recognition module configured to detect execution of pre-defined gestures by the user (1) wherein each of the pre-defined gestures is interpreted (124) as a corresponding command for the XR device (2),
**characterized in that**
the system is configured to execute the method of any one of the preceding claims.

13. XR system according to claim 12, wherein the XR device (2)
- is a wearable, particularly an XR goggle; and/or
- comprises controllers and/or a neural link for manipulating the extended reality.

14. XR system according to claim 12 or claim 13, wherein the XR device (2) comprises the gesture recognition module, particularly wherein the gesture recognition module comprises at least one camera that is configured, positioned and aligned to capture images of the hands of the user (1).

15. Computer program product comprising program code having computer-executable instructions for performing the method (100) according to any one of claims 1 to 11, particularly when executed on a computing unit of the XR system according to any one of claims 12 to 14.
